# EUROPEAN PATENT APPLICATION

(11) **EP 2 654 251 A1**
(43) Date of publication of application: **23.10.2013**
(21) Application number: 11848531.7
(22) Date of filing: 19.12.2011
(51) Int. Cl.: H04L 12/56, H04L 12/28

(54) **COMMUNICATION SYSTEM, NODE, PACKET TRANSFER METHOD AND PROGRAM**

(30) Priority: 17.12.2010 JP 2010281473
(71) Applicant: NEC Corporation, Tokyo 108-8001 (JP)
(72) Inventor: TANABE, Yosuke, Tokyo 108-8001 (JP)
(74) Representative: Vossius & Partner
(86) International application number: PCT/JP2011/079303
(87) International publication number: WO 2012/081721

(57) **Abstract**

Even though the number of communication terminals or that of communication services exploited by the communication terminals is increased, load imposed on a node or a controller is to be less likely to be increased, while delay in processing is to be less likely to be produced. Each node of a communication system holds a plurality of processing rules (packet handling operations) which correlate the forwarding destination of a packet belonging to each flow with a set of collation rules that identify each flow, and forwards the received packet in accordance with the processing rules. In case the destination address of the received packet is such address indicating that the packet is to be multicast, the node multicasts the packet using the plurality of the processing rules the node holds.

## Description

### TECHNICAL FIELD

### [Cross-References to Related Applications]

The present application claims priority based on JP Patent Application 2010-281473 filed in Japan on December 17, 2010, the entire disclosure is incorporated herein by reference thereto.
This invention relates to a communication system, a node, a packet forwarding method and a program. More particularly, it relates to a communication system that implements communication using a node that processes a received packet in accordance with a set of processing rules that match the packet, a node, a packet forwarding method, and a program.

### BACKGROUND ART

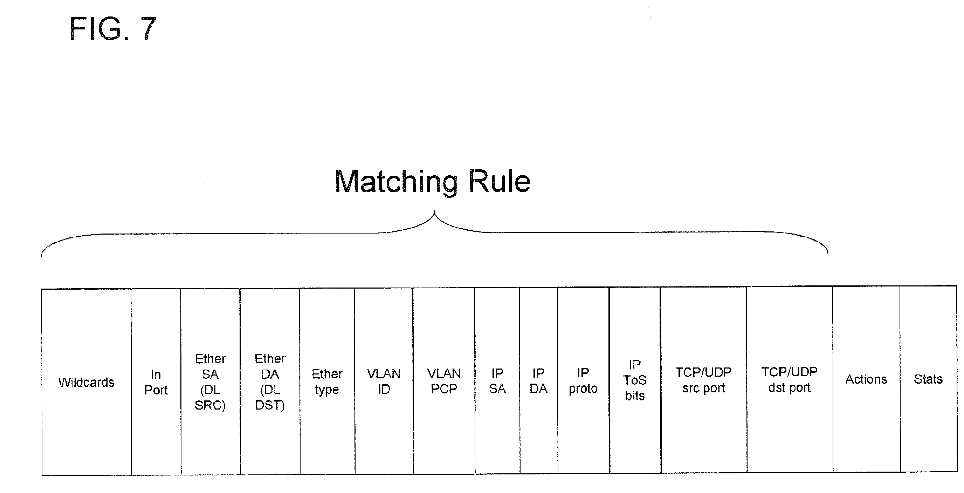

A technique termed OpenFlow has been proposed these years, as indicated in Patent Literature 1 and in Non-Patent Literatures 1, 2. The OpenFlow grasps communication as an end-to-end flow and performs routing control, recovery from malfunctions, load balancing and optimization on the flow-by-flow basis. An OpenFlow switch, operating as a forwarding node, includes a secure channel for communication with an OpenFlow controller, and is run in operation in accordance with a flow table which is optionally commanded to be amplified or rewritten from the OpenFlow controller. The flow table defines a set of flow entries (processing rules) on the flow-by-flow basis. Each flow entry is a set of collation rules (matching rules) to match a packet header against, an action(s) (Action or Actions) that define processing contents, and the flow statistic information (Stats) (see Fig.7).

On receipt of a first packet, at an example, the OpenFlow switch retrieves, from the flow table, such entry having collation rules (matching rules) matched to the header information of the received packet. If, as a result of the retrieval, the entry matched to the received packet is found, the OpenFlow switch executes the processing contents as stated in an action field of the entry for the received packet. If conversely such entry matched to the received packet is not found, the OpenFlow switch forwards the received packet to the OpenFlow controller over the secure channel to request the OpenFlow controller to decide on a route of the packet based on the source and destination of transmission of the received packet, that is, to set the processing rules. The OpenFlow switch receives a flow entry which will comply with the request to update the flow table.

### CITATIONS LIST

### [Patent Literature]

Patent Literature 1: International Publication 2008/095010

### [Non-Patent Literatures]

### Non-Patent Literature 1

Nick McKeown and seven others: "OpenFlow: Enabling Innovation in Campus Networks", [online], [retrieved on November 22, H22 (2010), Internet <URL: http://www.openflowswitch.org/documents/openflow-wp-latest.pdf>

### Non-Patent Literature 2

"OpenFlow Switch Specification" Version 1.0.0. (Wire Protocol 0x01), [retrieved on November 22 (2010), Internet <URL: http://www.openflows witch.org/documents/openflow-spec-v1.0.0.pdf>

### SUMMARY OF THE INVENTION

### PROBLEM TO BE SOLVED BY THE INVENTION

The following analysis is made by the present invention.
In the techniques of the Patent Literature 1 and the Non-Patent Literatures 1, 2, communication is grasped as an end-to-end flow. Thus, as the number of communication terminals connected to each node or the number of communication services exploited by the respective communication terminals is increased, it becomes necessary to provide a number of processing rules corresponding to the number of the flows. These processing rules are equivalent to the above mentioned flow entries.

On the other hand, if the number of communication terminals or the number of communication services exploited by the respective communication terminals is increased, the number of requests from each node to the controller to set processing rules for unknown packets is also increased. These unknown packets are equivalent to there being no flow entries in the flow table in the case of the OpenFlow described above.

The techniques of the Patent Literature 1 and the Non-Patent Literatures 1, 2, described above, suffer from the drawback that, as the number of the communication terminals or that of the communication services exploited by the respective communication terminals is increased, the load imposed on the nodes or the controller is also increased, thus possibly producing a processing delay.

The above problem may also be brought about when the address of the received packet is a multicast address. In such case, the number of the processing rules held by the nodes or that of the requests to the controller to set the processing rules, in particular, may drastically be increased.

### SOLUTION TO THE PROBLEM

In a first aspect of the present invention, there is provided a communication system including a node holding a plurality of processing rules (packet handling operations) which correlate the forwarding destination of a packet belonging to each flow with a set of collation rules that identify each flow. The node forwards the received packet in accordance with the processing rules. In case the destination address of the received packet is such address indicating that the received packet is to be multicast, the node multicasts the packet using the plurality of the processing rules the node holds.

In a second aspect of the present invention, there is provided a node holding a plurality of processing rules (packet handling operations) which correlate the forwarding destination of a packet belonging to each flow with a set of collation rules that identify each flow. The node forwards the received packet in accordance with the processing rules. In case the destination address of the received packet is such address indicating that the received packet is to be multicast, the node multicasts the packet using the plurality of the processing rules the node holds.

In a third aspect of the present invention, there is provided a method for forwarding a packet at a node holding a plurality of processing rules (packet handling operations) which correlate the forwarding destination of a packet belonging to each flow with a set of collation rules that identify each flow. The node forwards the received packet in accordance with the processing rules. The method includes a step of confirming whether or not a destination address of the received packet is an address indicating that the packet is to be multicast, and a step of multicast-forwarding the packet, using the plurality of processing rules, in case the destination address of the received packet is an address indicating that the received packet is to be multicast. The present method is bound up with a specific machine which is a node processing a received packet in accordance with processing rules as set from the controller.

In a fourth aspect of the present invention, there is provided a program for allowing a computer, constituting a node holding a plurality of processing rules (packet handling operations) which correlate the forwarding destination of a packet belonging to each flow with a set of collation rules that identify each flow, the node forwarding the received packet in accordance with the processing rules, to perform the processing of confirming whether or not a destination address of the received packet is an address indicating that the packet is to be multicast, and the processing of multicast-forwarding the packet, using the plurality of processing rules, in case the destination address of the received packet is an address indicating that the packet is to be multicast. The program may be recorded on a computer readable recording medium. That is, the present invention may be implemented as a computer program product.

### MERITORIOUS EFFECT OF THE INVENTION

According to the present invention, increase in the load imposed on the node or on the controller or the processing delay may be less likely to take place even though the number of the communication terminals or the number of the communication services exploited by the communication terminals is increased.

### BRIEF DESCRIPTION OF THE DRAWINGS

Fig.1 is a schematic block diagram showing the configuration of an exemplary embodiment 1 of the present invention.
Fig.2 is a block diagram showing a configuration of a node of the exemplary embodiment 1 of the present invention.
Fig.3 is a schematic block diagram showing example routes as set by the controller of the exemplary embodiment 1 of the present invention.
Fig.4 is a diagrammatic view showing example processing rules as set on a node 200A of Fig.3.
Fig.5 is a flowchart showing the operation at the time of packet reception of the node of the exemplary embodiment 1 of the present invention.
Fig.6 is a flowchart showing details of the processing for producing the processing rule retrieving conditions (step S200) of Fig.5.
Fig.7 is a diagrammatic view showing the configuration of a flow entry as stated in Non-Patent Publication 2.

### MODES FOR CARRYING OUT THE INVENTION

First, schematics of an exemplary embodiment of the present invention will be explained. It is noted that symbols used in the schematics in referring to the drawings are only for assisting in the understanding and are not intended to limit the scope of the invention. In the exemplary embodiment, the present invention may be implemented by a communication system including a node holding a plurality of processing rules correlating the forwarding destination of a packet belonging to each flow with a set of collation rules identifying the flow. The node forwards the received packet in accordance with the processing rules. Specifically, when the destination address of the received packet indicates that the packet is to be multi-cast, the node multicast forwards the packet using the plurality of the processing rules the node holds.

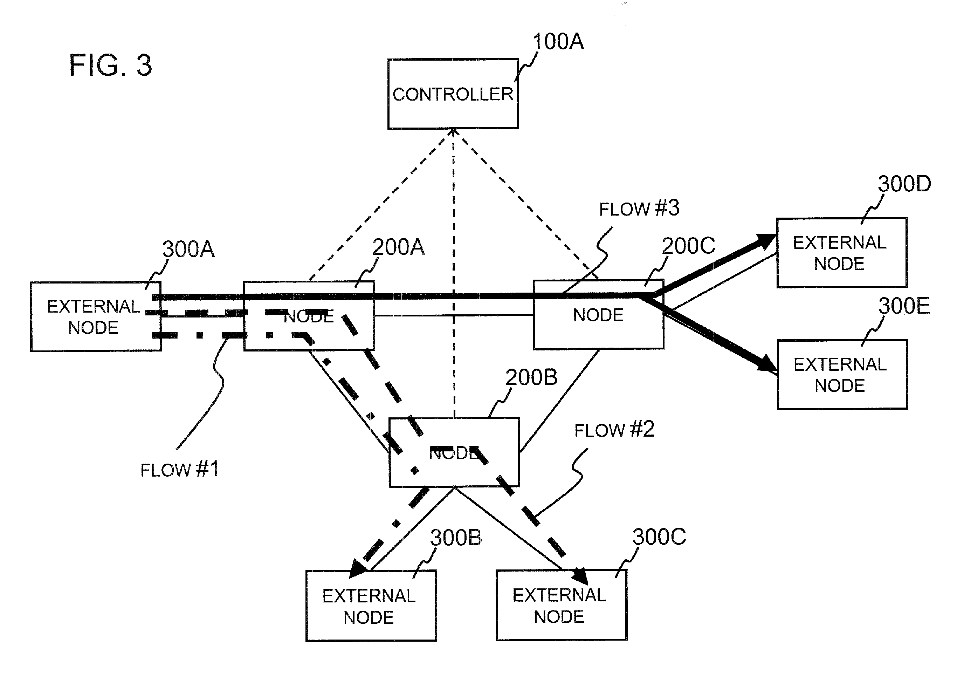

For example, it is assumed that, if respective routes are already set for three flows, as shown in Fig.3, the node 200A has newly received a packet which belongs to none of the three flows and the destination address of which indicates that the packet is to be multicast. In this case, the node 200A multicast-forwards the packet to the nodes 200B, 200C, using the processing rules the node holds, without requesting the controller 100A to set processing rules.

It is seen from above that multicast-forwarding may be realized without setting new processing rules in the node. It is observed that, in doing the multicast-forwarding, referred to above, it is unnecessary for the node to use the total of the processing rules it holds, such that node may select only those processing rules that are needed, as will be explained in detail in the following exemplary embodiment.

### [Exemplary embodiment 1]

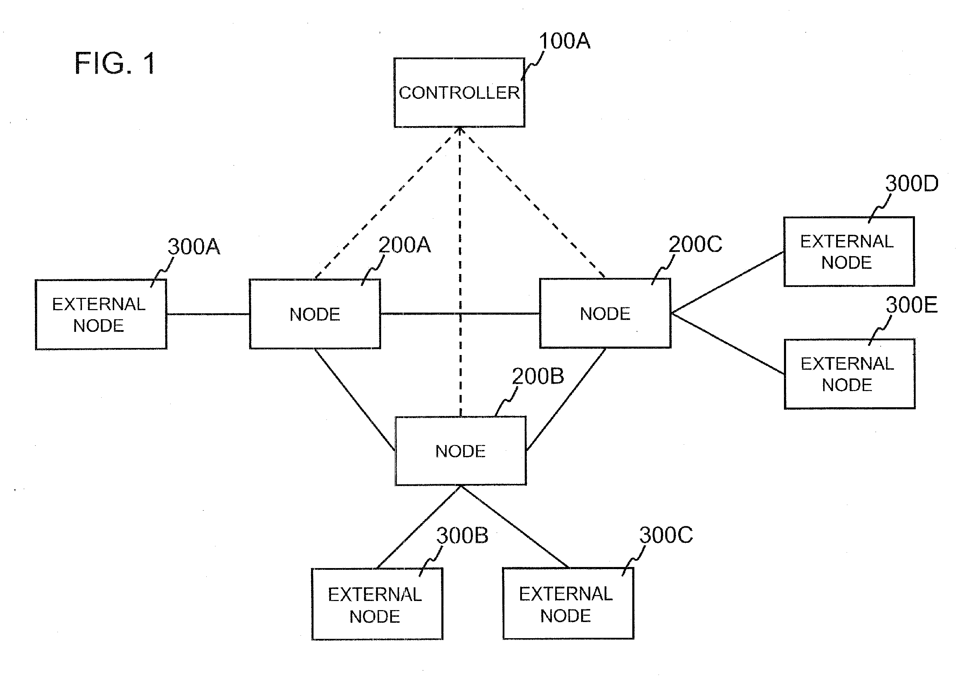

An exemplary embodiment 1 of the present invention will now be described in detail with reference to the drawings. Fig.1 shows a configuration of the exemplary embodiment 1 of the communication system of the present invention.

Referring to Fig.1, a plurality of nodes 200A to 200C and a controller 100A that manages the nodes are shown. A plurality of external nodes 300A to 300E are attached to the nodes 200A to 200C.

The controller 100A sets processing rules for these nodes 200A to 200C to manage communication among the external nodes 300A to 300E. These processing rules prescribe the contents of the processing to be performed for the received packet.

An OpenFlow controller according to Non-Patent Literatures 1 and, setting a flow entry equivalent to the processing rules for an OpenFlow switch, may be used as the controller 100A.

When one of the nodes 200A to 200C receives a packet from other nodes, inclusive of the external nodes 300A to 300E, the node that has received the packet selects, out of the processing rules as set from the controller 100, the processing rules including collation rules matched to the received packet, in order to perform the processing for the received packet.

The contents of the processing for the received packet as set include forwarding the received packet to the other node inclusive of the nodes 300A to 300E or to the controller 100. Other processing contents, such as drop (discarding) of the packet or header rewrite, may also be set as appropriate.

The nodes 200A to 200C may also be implemented by adding a multicast-forwarding function, as later explained, to the OpenFlow switch of Non-Patent Publications 1 and 2, which is run in operation in accordance with a flow entry, equivalent to the processing rules, as set by the OpenFlow controller.

The external nodes 300 may, for example, be a user terminal that attaches to any of the nodes 200A to 200C to have communication with another node 300.

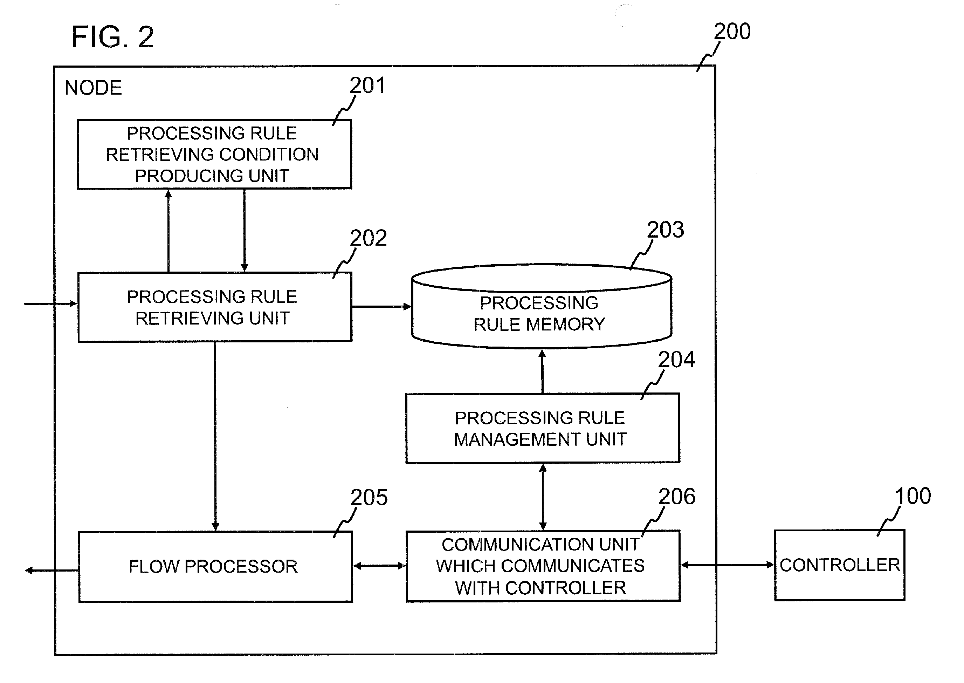

Fig.2 depicts a block diagram showing a detailed configuration of each of the nodes 200A to 200C. In the explanation to follow, each of the nodes 200A to 200C is referred to as 'node 200' in case there is no necessity to distinguish between the nodes. Referring to Fig.2, each node includes a processing rule retrieving condition producing unit 201, a processing rule retrieving unit 202, a processing rule memory 203, a processing rule management unit 204, a flow processor 205 and a communication unit 206 which communicates with the controller.

The processing rule retrieving condition producing unit 201 prepares processing rule retrieving conditions, based on a received packet or the information extracted from the received packet. The received packet or the information extracted therefrom has been delivered from the processing rule retrieving unit 202. The processing rule retrieving conditions are used by the processing rule retrieving unit 202 in retrieving, from the processing rule memory 203, the processing rules that match the received packet. The so generated processing rule retrieving conditions are routed to the processing rule retrieving unit 202.

On receipt of a packet from the external node or another node, the processing rule retrieving unit 202 outputs to the processing rule retrieving condition producing unit 201 the received packet or the information extracted therefrom in order to request the processing rule retrieving condition producing unit to prepare the processing rule retrieving conditions.

The processing rule retrieving unit 202 retrieves the processing rule memory 203, using the processing rule retrieving conditions as handed over from the processing rule retrieving condition producing unit 201. In case the processing rules matched to the processing rule retrieving conditions could be extracted from the processing rule memory 203, the processing rule retrieving unit 202 delivers the processing contents (actions) prescribed in the processing rules matched to the processing rule retrieving conditions, as well as the received packet, to the flow processor 205.

Note that, if, as a result of the above retrieval, the processing rules as matched to the processing rule retrieving conditions could be extracted with success, the time-out value of the processing rules extracted or the statistic information may be updated by the processing rule retrieving unit 202. The time-out value may be used to control removal of the processing rules for which no matched packet could be received for a preset time. On the other hand, the statistic information may be used for the controller 100 to grasp the traffic state.

The processing rule memory 203 holds the processing rules used for the node 200 to process the received packet. Such processing rule memory 203 may be implemented by the flow table of the OpenFlow switch of the Non-Patent Literatures 1, 2 (see Fig.7).

The processing rule management unit 204 amplifies, drops or references the processing rules, as held by the processing rule memory 203, in accordance with instructions received from the controller 100 via the communication unit 206. In case the processing rule retrieving unit 202 updates the time-out value of the processing rules as well as the statistic information, the processing rule management unit 204 drops the timed-out processing rules or references the statistic information to inform the result to the controller 100, as mentioned above.

The flow processor 205 processes the received packet in accordance with the received packet and the processing contents for the received packet (actions), handed over from the controller 100 via the processing rule retrieving unit 202 or the communication unit 206.

The communication unit 206 relays with the controller 100, processing rule management unit 204 and with the flow processor 205.

Note that respective parts (processing means) of the node 200, shown in Fig.2, may be implemented by a computer program, as loaded on a computer constituting the node 200, using the computer's hardware. The computer program is configured to perform the above respective processing operations.

In the explanation to follow, it is assumed that respective routes for three flows have already been set by the controller 100A, as shown in Fig.3.

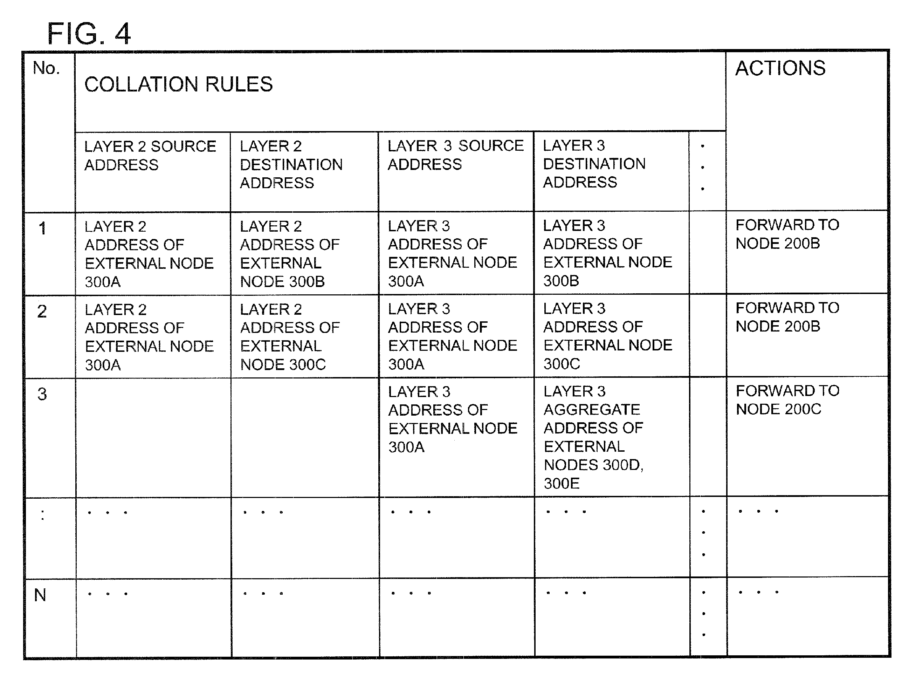

Fig.4 shows example processing rules as set at the node 200A of Fig.3. A No.1 entry shows processing rules to implement a route whose source is the external node 300A and whose destination is the external node 300B, as indicated by a chain dotted line of Fig.3. In the example of Fig.4, there are set a set of collation rules in which a Layer 2 source address is a Layer 2 address of the external node 300A, a Layer 2 destination address is a Layer 2 address of the external node 300B, a Layer 3 source address is a Layer 3 address of the external node 300A, and a Layer 3 destination address is a Layer 3 address of the external node 300B. There are also set processing contents to forward a packet matched to the collation rules to the node 200B.

A No.2 entry of Fig.4 shows processing rules to implement a route whose source is the external node 300A and whose destination is the external node 300C, as indicated by a dotted line of Fig.3. In the example of Fig.4, there are set a set of collation rules in which a Layer 2 source address is a Layer 2 address of the external node 300A, a Layer 2 destination address is a Layer 2 address of the external node 300C, a Layer 3 source address is a Layer 3 address of the external node 300A, and a Layer 3 destination address is a Layer 3 address of the external node 300C. There are also set processing contents to forward a packet matched to the collation rules to the node 200B.

Likewise, a No.3 entry of Fig.4 shows processing rules to implement a route whose source is the external node 300A and whose destination is the external nodes 300D and 300E, as indicated by a solid line of Fig.3. In the example of Fig.4, there are set a set of collation rules to extract a packet in which the Layer 2 addresses are 'don't care', a Layer 3 source address is a Layer 3 address of the external node 300A and in which a Layer 3 destination address is an aggregated address of the Layer 3 addresses of the external nodes 300D and 300E. There are also set processing contents to forward a packet matched to the collation rules to the node 200C.

Those received packets that are matched to none of the collation rules of Fig.4 are forwarded to the controller 100A, and a request is made for the controller to set processing rules. Note that the collation rules of Fig.4 are only for assisting in the understanding of the present invention, such that, as examples, an input port number (In Port), a VLAN ID, a Layer 4 protocol number, a Layer 4 source port number or destination port number (TCT/UDP src port or TCP/UDP dst port), may be set. Any optional field may be wildcarded, as mentioned in Non-Patent publication 2.

In the explanation to follow, it is assumed that Layer 2 addresses of the external nodes 300A, 300B and 300C are respectively MAC (Media Access Control) addresses [00:11:22:33:44:AA], [00:11:22:33:44:BB] and [00:11:22:33:44:CC].

It is also assumed that Layer 3 addresses of the external nodes 300A, 300B and 300C are respectively IP addresses [192.168.0.1], [192.168.0.2] and [192.168.0.3], and that Layer 3 addresses of the external nodes 300D, 300E are respectively IP addresses [192.168.0.4] and [192.168.0.5], with the aggregate address of these Layer 3 addresses being [192.168.0.4/31].

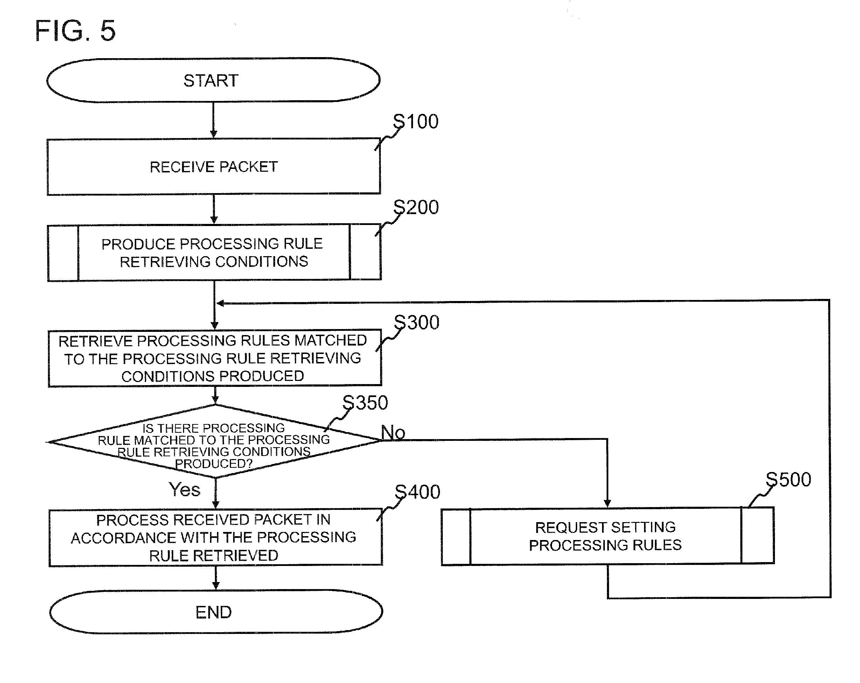

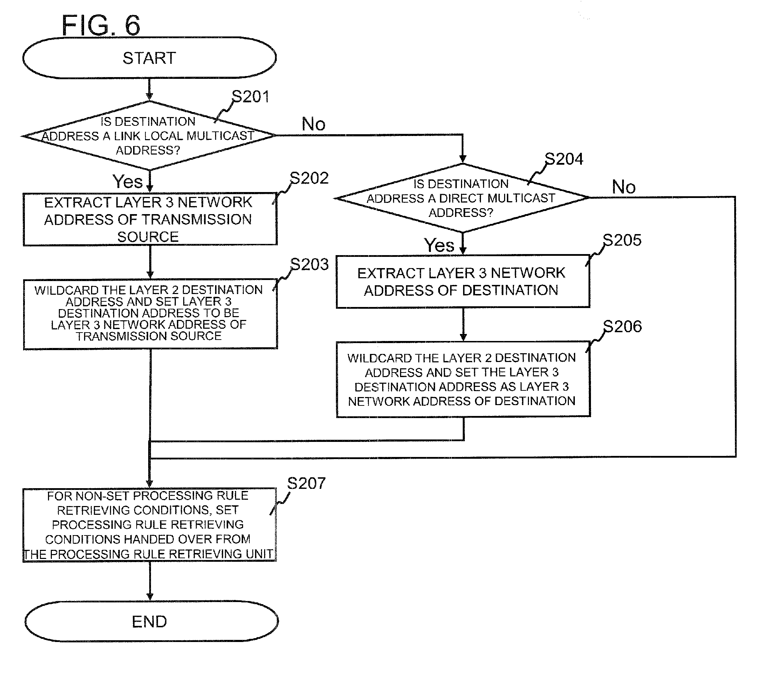

The operation of the node of the subject exemplary embodiment will now be explained. Referring to Fig.5 and to Fig.6 which show details of a step S200 of Fig.5, the operation of the subject exemplary embodiment will be explained. Note that, in the explanation to follow, it is assumed that the routes and corresponding processing rules shown in Figs.3 and 4 have been set beforehand from the controller 100A.

Referring to Fig.5, when the node 200 has received a packet, the node initially outputs the processing rule retrieving condition producing information to the processing rule retrieving condition producing unit 201, by way of requesting the producing unit to prepare the processing rule retrieving conditions (step S100). The processing rule retrieving condition producing information is used to retrieve the processing rules that have been extracted from the received packet and have matched to the received packet.

It is assumed that, in the subject exemplary embodiment, the following information:
- a Layer 2 source address and a Layer 2 destination address;
- a Layer 3 source address and a Layer 3 destination address; and
- the information that enables a Layer 3 network address to be identified
are contained in the processing rule retrieving condition producing information handed over from the processing rule retrieving unit 202 of the node 200 to the processing rule retrieving condition producing unit 201.
Note that, if the protocol is such a protocol containing a Layer 3 source address and a Layer 3 destination address, such as ARP (Address Resolution Protocol), the Layer 3 source address and the Layer 3 destination address may be acquired from the protocol's format.

If the length of the Layer 3 network address is set in, as an example, a VLAN ID field, the VLAN ID may be used as the information that enables the Layer 3 network address to be identified. If, in an IPv4 header or an IPv6 header, there is such an option header in which the length of the Layer 3 network address or a Layer 3 network address mask has been set, such option header may also be used. It is assumed here that the length of the Layer 3 network address has been set in the VLAN ID field, and that the VLAN ID of an input frame is extracted as the information that enables the Layer 3 network address to be identified.

The processing rule retrieving condition producing unit 201 of the node 200 then generates the processing rule retrieving conditions, based on the processing rule retrieving condition producing information as handed over from the processing rule retrieving unit 202 (step S200).

The processing rule retrieving conditions may be produced in the following manner by the processing rule retrieving condition producing unit 201:

Initially, the processing rule retrieving condition producing unit 201 of the node 200 checks whether or not the Layer 2 or Layer 3 destination address, contained in the processing rule retrieving condition producing information, handed over from the processing rule retrieving unit 202, is a link local multicast address (step S201 of Fig.6).

If the address notation system is IPv4, the Layer 2 or Layer 3 destination addresses being the link local multicast address encompasses a case where a Layer 2 destination address is a MAC address of FF:FF:FF:FF:FF:FF and the Layer 3 destination address is 255.255.255.255, and a case where a Layer 2 destination address is a MAC address of FF:FF:FF:FF:FF:FF and the type is ARP. If the address notation system is IPv6, the Layer 2 or Layer 3 destination addresses being the link local multicast addresses encompasses a case where a Layer 2 destination address is a MAC address beginning with 25 bits of 0000 0001 0000 0000 1001 1110 0 and the Layer 3 destination address is FF02::/16.

It is assumed that the Layer 2 or Layer 3 destination address has been determined at the step S201 to be the link local multicast address (YES of the step S201). In this case, the processing rule retrieving condition producing unit 201 extracts a network address of the transmission source of the Layer 3 of the received packet, using the information that enables the Layer 3 network address to be identified and, as necessary, the Layer 3 source address (step S202).

It is assumed that, as an example, 24 is set in the VLAN ID as the information that enables the Layer 3 network address to be identified, and that, in such case, the Layer 3 source address is 192.168.0.1 of the node 200A. Then, 192.168.0.0/24 is extracted as the Layer 3 source network address. If the type is the ARP, it is sufficient to extract the Layer 3 source address from the ARP format. The same applies to the case of the IPv6 as well. Note that, if the source network address itself presents itself as the information that enables the Layer 3 network address to be identified, such source network address itself may directly be used.

Next, the processing rule retrieving condition producing unit 201 sets, by way of the processing rule retrieving conditions, the Layer 2 destination address as a wildcard address, while setting the Layer 3 destination address as network address of the Layer 3 transmission source of the received packet as extracted at the step S202 (step S203).

It is assumed that, in the step S201, it has been determined that the Layer 2 or Layer 3 destination address is not the link local multicast address (No of the step S201). In such case, the processing rule retrieving condition producing unit 201 checks whether or not the Layer 2 or Layer 3 destination address, contained in the information as handed over from the processing rule retrieving unit 202, is a direct multicast address (step S204).

If the address notation system is IPv4, the Layer 2 or Layer 3 destination address being the direct multicast address encompasses a case where a Layer 2 destination address is a MAC address of FF:FF:FF:FF:FF:FF and the Layer 3 destination address is other than 255.255.255.255.

It is assumed that the Layer 2 or Layer 3 destination address has been determined at the step S204 to be the direct multicast address (Yes of the step S204). In such case, the processing rule retrieving condition producing unit 201 extracts the network address of the Layer 3 destination of the received packet, using the above mentioned information that enables the Layer 3 network address to be identified, and also using, as necessary, the Layer 3 destination network address (step S205).

If, as an example, 24 has been set in the VLAN ID as the information that enables the Layer 3 network address to be identified, and the Layer 3 destination address is 198.168.0.255, then 192.168.0.0/24 is extracted as the Layer 3 destination network address. Note that, if the network address itself exists as the information that enables the Layer 3 network address to be identified, the network address of the destination may directly be used.

The processing rule retrieving condition producing unit 201 then sets, as the processing rule retrieving conditions, the Layer 2 destination address as wildcard address, while setting the Layer 3 destination address as the Layer 3 destination network address of the received packet as extracted at the step S205 (step S206).

Finally, the processing rule retrieving condition producing unit 201 directly sets the processing rule retrieving condition producing information, handed over from the processing rule retrieving unit, as being the processing rule retrieving conditions that were not set at the steps S203, S206 (step S207). However, if ARP, is used as protocol, as an example, the Layer 3 source address or the Layer 3 destination address is extracted from the format of such protocol and added to the information.

In the explanation to follow, it is assumed that the destination address is determined at the step S201 or S204 to be a link local multicast address or a direct multicast address. It is also assumed that such processing rule retrieving conditions have been produced in which a MAC address 00:11:22:33:44:AA of the node 200A is set as the Layer 2 source address, the Layer 2 destination address is wildcarded, an IPv4 address 192.168.0.1 of the node 200A is set as the Layer 3 source address and the network address 192.168.0.0/24 of the node 200A is set as the Layer 3 destination address.

Referring again to Fig.5, the processing rule retrieving unit 202, which has received the processing rule retrieving conditions, produced as described above, from the processing rule retrieving condition producing unit 201, retrieves the processing rules, matched to the processing rule retrieving conditions, from the processing rule memory 203, using the processing rule retrieving conditions received (step S300). At this time, as regards the Layer 3 destination address, the total of the processing rules having the destination addresses contained in the Layer 3 destination addresses of the processing rule retrieving conditions, or the total of the processing rules having the destination addresses containing the Layer 3 destination addresses of the processing rule retrieving conditions, are retrieved (Yes of a step S350).

The processing rule retrieving unit 202 hands over a set of a received packet and an action(s) of the processing rules, including the collation rules that are matched to the remaining conditions as well, to the flow processor 205.

If the processing rules, matched to the above mentioned processing rule retrieving conditions, from among the processing rules of Fig.4, are retrieved, entries of Nos.1 and 3 are extracted. If there is an entry with the Layer 3 destination address of 192.168.0.0/16, as the processing rules, the processing rules are also extracted, even though this is not shown in Fig.4.

The flow processor 205 operates in response to the received packet, handed over from the processing rule retrieving unit 202, as described above, and to the action(s) therefor, to output the received packet to the external node 300, to the remaining node(s) 200 or to the controller 100A, via the communication unit 206, or to drop the packet (step S400). If the entries of Nos.1 and 3 are extracted from the processing rules of Fig.4, the received packet is output to the nodes 200B and 200C in accordance with the actions of the processing rules, by way of multicast-forwarding.

If, on the other hand, no processing rules, matched to the processing rule retrieving conditions, could be retrieved with success from the processing rule memory 203 (No of the step S350), a request to set processing rules for the packet is sent to the controller 100A (step S500). On completion of the setting of the processing rules by the controller 100A, the processing rules are again retrieved to carry out packet processing in accordance with the so set processing rules (steps S300, S400).

In the subject exemplary embodiment, described above, the number of the processing rules, maintained in the processing rule memory 203 of the node 200, may be reduced. The reason is that a packet, whose Layer 2 or Layer 3 destination address is a multicast address, can be forwarded using pre-existing processing rules, without the necessity of setting the processing rules for multicasting such packet in the node 200.

In the flowchart of Fig.5, the request is made to the controller 100A at the step S500 to set the processing rules for the packet. It is however also possible to drop the packet, without requesting the controller to set the processing rules, while it is also possible for the controller 100A to forward to another node the packet received in connection with the request to set the processing rules. The controller 100A may also terminate the packet received in connection with the request to set the processing rules.

In the above described exemplary embodiment, the processing rule retrieving condition producing unit 201 receives the processing rule retrieving condition producing information from the processing rule retrieving unit 202 to produce the processing rule retrieving conditions. It is however also possible for the processing rule retrieving condition producing unit 201 to receive, as the processing rule retrieving condition producing information, at least the Layer 2 source address, Layer 2 destination address, Layer 3 source address and the Layer 3 destination address, as well as the information that enables the Layer 3 network address to be identified, from the processing rule retrieving unit 202, in order to produce part of the processing rule retrieving conditions. Note that the above source and destination addresses may also be those that can be acquired from, for example, the ARP format. The processing rule retrieving condition producing unit 201 may then produce the processing rule retrieving conditions as the part of the processing rule retrieving conditions, received by the processing rule retrieving unit 202 from the processing rule retrieving condition producing unit 201, is reflected in the processing rule retrieving condition producing information.

Moreover, in the subject exemplary embodiment, such problems as delayed packet processing, compaction of the network bandwidth between the controller and the node or an increased processing load on the controller, may be relieved. The reason is that the processing rules to multicast the packet, whose Layer 2 or Layer 3 destination address is a multicast address, do not have to be set in the node 200. In addition, in the subject exemplary embodiment, there may not arise such situations in which processing rules are unable to be registered due to limitations on the number of the processing rules that may be maintained in the node 200, or in which the node 200 has to request the controller 100A to set the processing rules for packets that are to be multicast.

Although the description has been made of preferred exemplary embodiments of the present invention, further modifications, substitutions or adjustments may be made without departing from the basic technical concept of the present invention. For example, the number of the nodes, shown in the above described exemplary embodiment, is merely illustrative, such that there is no particular limitation to the number of the nodes.

The above described exemplary embodiment is directed to example processing rules as set in the node 200A shown in Fig.4. However, the processing rules, including network addresses, which may also be prefixes thereof, may also be set in advance in the Layer 3 source or destination addresses.

The node 200 may also possess a table in which the Layer 3 addresses registered in the above mentioned processing rules are correlated with their network addresses. In such case, the processing like that in the above described exemplary embodiment may be carried out by referencing the above table, in the steps S202 and S205 of Fig.6, even in case of absence in the received packet of the 'information that enables the Layer 3 network address to be identified'.

In addition, if the processing rules including the network addresses, which may also be their prefixes, are set in advance in the Layer 3 source or destination addresses, the processing of the step S202 of Fig.6 may be omitted in case of local broadcast. In this case, the step S203 reads: 'such processing rule retrieving condition is produced in which the Layer 3 destination address is set as the Layer 3 destination address having the same network address as the network address of the Layer 3 source of the received packet'.

In this case, a flag testifying to the common Layer 3 network address, for example, may be provided in an optional field in the processing rules. By so doing, the processing rules having the common Layer 3 network address may readily be retrieved.

In similar manner, in case of direct broadcast, the processing of step S204 may be omitted, and corresponding changes may then be made in the processing of the step S205.

In the explanation of the above described exemplary embodiments, it is presupposed that respective routes are already set by the controller 100A for the three flows, as shown in Fig.3. However, if only a smaller number of processing rules have been set in the nodes, the controller 100A may be requested to set the processing rules even for those packets that are to be multicast. It is also possible for the controller 100A, which has grasped the processing rules as set in the nodes, to set the processing rules necessary for each node 200 to perform the above mentioned multicast-forwarding. It is likewise possible for the controller 100A to check the contents of the processing rules as set in the individual nodes 200 to exercise on/off control as to whether or not multicast-forwarding is to be performed using the above mentioned pre-set processing rules.

In addition, in order to cope with a loop, it is possible to rewrite the header of a packet for loop detection before doing multicast-forwarding. Such processing rule may then be set which discards the packet in case a loop is detected as a result of receipt of the packet with the rewritten header.

Preferred modes of the present invention may be summarized as follows:

### [Mode 1]

The communication system according to the above mentioned first aspect.

### [Mode 2]

The node preferably includes a processing rule retrieving condition producing unit (processing rule retrieving condition producing means) that generates retrieving conditions to extract processing rules matched to the destinations the packet is to be multicast to.
In case the destination address of the received packet indicates that the packet is to be multicast, the processing rules including collation rules matched to the retrieving conditions generated by the processing rule retrieving condition producing unit are preferably extracted to execute multicast-forwarding.

### [Mode 3]

In case the destination address of the received packet is a link local multicast address, the processing rule retrieving condition producing unit preferably generates the retrieving conditions that extract processing rules including collation rules in which the Layer 3 destination address coincides with the Layer 3 network address of the source of packet transmission.

### [Mode 4]

In case the destination address of the received packet is a direct multicast address, the processing rule retrieving condition producing unit preferably generates the retrieving conditions that extract the processing rules including collation rules in which the Layer 3 destination address coincides with the Layer 3 network address of the destination.

### [Mode 5]

The node according to the above mentioned second aspect.

### [Mode 6]

The node preferably includes a processing rule retrieving condition producing unit (processing rule retrieving condition producing means) that generates retrieving conditions to extract processing rules matched to the destination the packet is to be multicast to.
In case the destination address of the received packet is such address indicating that the packet is to be multicast, the processing rules including collation rules matched to the retrieving conditions generated by the processing rule retrieving condition producing unit are preferably extracted to execute multicast-forwarding.

### [Mode 7]

In case the destination address of the received packet is a link local multicast address, the processing rule retrieving condition producing unit preferably generates the retrieving conditions that extract the processing rules including collation rules in which the Layer 3 destination address coincides with the Layer 3 network address of the source of packet transmission.

### [Mode 8]

In case the destination address of the received packet is a direct multicast address, the processing rule retrieving condition producing unit preferably generates the retrieving conditions that extract the processing rules in which the Layer 3 destination address has the collation rules coincident with the Layer 3 network address of the destination.

### [Mode 9]

The packet forwarding method according to the above mentioned third aspect.

### [Mode 10]

The program according to the above mentioned fourth aspect.
Like the communication system of mode 1, the packet forwarding method and the program may be extended in the same way as the modes 2 to 4 in connection with respective component elements or steps.
The disclosures of the above mentioned Patent literature and Non-Patent Literature are to be incorporated herein by reference. The particular exemplary embodiments or examples may be modified or adjusted within the gamut of the entire disclosure of the present invention, inclusive of claims, based on the fundamental technical concept of the invention. In addition, various combinations or selections of the elements disclosed in the present invention, inclusive of claim elements, elements of the respective exemplary embodiments or examples, or elements of the drawings, may be made within the concept of the claims. That is, the present invention may encompass various modifications or corrections that may occur to those skilled in the art within the gamut of the entire disclosure of the present invention, inclusive of claims and the technical concept of the present invention.

### EXPLANATION OF REFERENCE NUMERALS

100, 100A controllers
200, 200A to 200C nodes
201 processing rule retrieving condition producing unit
202 processing rule retrieving unit
203 processing rule memory
204 processing rule management unit
205 flow processor
206 communication unit for communication with controller
300A to 300E external nodes

## Claims

1. A communication system, comprising a node holding a plurality of processing rules which correlate the forwarding destination of a packet belonging to each flow with a set of collation rules that identify each flow; the node forwarding the packet received in accordance with the processing rules; wherein,
in case the destination address of the received packet is such address indicating that the received packet is to be multicast, the node multicasts the packet using the plurality of the processing rules the node holds.

2. The communication system according to claim 1, wherein,
the node includes a processing rule retrieving condition producing unit that produces retrieving conditions which will extract the processing rules matched to a destination of multicasting; and wherein,
in case the destination address of the received packet is an address indicating that the received packet is to be multicast, such processing rules including collation rules matched to the retrieving conditions produced by the processing rule retrieving condition producing unit are extracted to execute multicast-forwarding.

3. The communication system according to claim 1 or 2, wherein,
in case the destination address of the received packet is a link local multicast address, the processing rule retrieving condition producing unit produces the retrieving conditions which will extract the processing rules including the collation rules in which a Layer 3 destination address coincides with a Layer 3 network address of the source of packet transmission.

4. The communication system according to any one of claims 1 to 3, wherein,
in case the destination address of the received packet is a direct multicast address, the processing rule retrieving condition producing unit produces retrieving conditions which will extract processing rules including collation rules in which the Layer 3 destination address coincides with a Layer 3 network address of the destination.

5. A node, holding a plurality of processing rules which correlate the forwarding destination of a packet belonging to each flow with a set of collation rules that identify each flow; the node forwarding the received packet in accordance with the processing rules; wherein,
in case the destination address of the received packet is such address indicating that the packet is to be multicast, the node multicasts the packet using the plurality of the processing rules the node holds.

6. The node according to claim 5, comprising a processing rule retrieving condition producing unit that produces retrieving conditions which will extract the processing rules matched to a destination for multicasting; wherein,
in case the destination address of the received packet is an address indicating that the received packet is to be multicast, such processing rules including collation rules matched to the retrieving conditions produced by the processing rule retrieving condition producing unit are extracted to execute multicast-forwarding.

7. The node according to claim 5 or 6, wherein,
in case the destination address of the received packet is a link local multicast address, the processing rule retrieving condition producing unit produces the retrieving conditions which will extract the processing rules including the collation rules in which a Layer 3 destination address coincides with a Layer 3 network address of the source of packet transmission.

8. The node according to any one of claims 5 to 7, wherein,
in case the destination address of the received packet is a direct multicast address, the processing rule retrieving condition producing unit produces retrieving conditions which will extract the processing rules including the collation rules in which a Layer 3 destination address coincides with a Layer 3 network address of the destination.

9. A method for forwarding a packet at a node holding a plurality of processing rules which correlate the forwarding destination of a packet belonging to each flow with a set of collation rules that identify each flow; the node forwarding the received packet in accordance with the processing rules;
the method comprising:
a step of confirming whether or not a destination address of the received packet is an address indicating that the received packet is to be multicast; and
a step of multicast-forwarding the packet, using the plurality of processing rules, in case the destination address of the received packet is an address indicating that the received packet is to be multicast.

10. A program, allowing a computer, constituting a node holding a plurality of processing rules which correlate the forwarding destination of a packet belonging to each flow with a set of collation rules that identify each flow, the node forwarding the received packet in accordance with the processing rules, to perform a processing of confirming whether or not a destination address of the received packet is an address indicating that the received packet is to be multicast; and a processing of multicast-forwarding the received packet, using the plurality of processing rules, the node holds, in case the destination address of the packet is an address indicating that the received packet is to be multicast.
